# FASCICULE DE BREVET EUROPEEN

(11) **EP 1 107 469 B1**
(45) Date de publication et mention de la délivrance du brevet: **26.02.2003**
(21) Numéro de dépôt: 00403342.9
(22) Date de dépôt: 29.11.2000
(51) Int. Cl.: H04B 1/707

(54) **Procédé de corrélation partielle dans un récepteur de type CDMA**
Verfahren zur partiellen Korrelation in einem CDMA-Empfänger
Method of partial correlation in a CDMA receiver

(30) Priorité: 01.12.1999 FR 9915169
(43) Date de publication de la demande: 13.06.2001
(73) Titulaire: SAGEM S.A., 75015 Paris (FR)
(72) Inventeur: Heurtaux, M. Frédéric, 13610 Le Puy Ste Reparade (FR); Marchand, M. Pierre, 92400 Courbevoie (FR); Pite, M. Eric, 78500 Sartrouville (FR)
(74) Mandataire: Schmit, Christian Norbert Marie

(56) Documents cités:
- EP-A- 0 767 544
- WO-A-98/53556
- US-A- 5 377 226
- US-A- 5 966 402

## Description

La présente invention a pour objet un procédé de corrélation partielle dans un récepteur de type CDMA (Code Division Multiple Access pour accès multiple à division par code en français). Elle s'applique à tous types de récepteurs dont un signal reçu est produit à partir d'une opération d'étalement de spectres et dont une transmission à travers un support utilise une technique de type CDMA. Elle s'applique ainsi plus particulièrement au domaine de la téléphonie mobile utilisant une telle technique d'accès. On cite principalement la téléphonie mobile selon la norme UMTS (Universal Mobile Telephony System pour système de téléphonie mobile universel en français). Le but de l'invention est de soulager l'unité chargée des opérations de corrélation dans le téléphone mobile en réduisant un rythme de fonctionnement de cette unité ainsi qu'une consommation électrique associée.

Actuellement, il est connu, dans les systèmes de type CDMA et pour réduire la consommation, de réaliser des opérations de corrélation entre le signal reçu et une séquence d'étalement en utilisant une version tronquée du signal reçu et de la séquence d'étalement. Une version tronquée consiste à utiliser N premiers échantillons associés au signal reçu et N premiers échantillons associés à la séquence d'étalement. On réalise ensuite une corrélation entré les N premiers échantillons du signal reçu et les N premiers échantillons de la séquence d'étalement. Une telle corrélation permet ainsi d'identifier malgré tout des symboles, ou de se synchroniser, et ce avec une dégradation des performances par rapport à une corrélation qui utiliserait tous les échantillons disponibles qui n'est pas pénalisante.

Le document US-A-5 377 226 enseigne la présence d'un décimateur dans une chaîne de réception et de traitement de signaux du type CDMA. Cependant, la présence du décimateur est due à la présence dans cette chaîne d'un filtre auto-adaptatif nécessitant un suréchantillonage. En effet, la technique de transmission choisie, en correspondance avec le filtre, provoque une augmentation de la bande passante. Le nombre d'échantillons à la sortie du filtre auto-adaptatif est alors inutilement élevé pour effectuer la corrélation. Le décimateur ramène donc le nombre d'échantillons à un niveau normal pour effectuer une corrélation totale. Le résultat de cette corrélation est utilisé, le cas échéant, dans la suite du traitement par une chaîne de décision afin de décider si le bit qui vient d'être reçu une valeur 0 ou une valeur 1. Cela indique bien que la corrélation réalisée utilise l'ensemble du code d'étalement, et non pas un code d'étalement décimé. En effet, seul l'emploi du code d'étalement complet permet de produire un signal utilisable pour le traitement ultérieur de l'information comprise dans le signal reçu.

Le document US-A-5 966 402 enseigne un procédé dans lequel une corrélation partielle est entreprise sur les premiers bits du signal reçu. Cette corrélation partielle ne met pas en oeuvre "une décimation régulière". Ce faisant, même si le travail du corrélateur y est réduit, ce demier doit effectuer son traitement avec un rythme élevé (et nécessite une mise en vitesse à cet égard) tel qu'il conduit à un vieillissement.

Une telle réalisation présente des problèmes. En effet, un rythme de fonctionnement d'un tel système selon l'état de la technique est déterminé notamment par la fréquence avec laquelle les échantillons sont présentés à une entrée de l'unité de corrélation. Plus précisément le signal reçu est échantillonné, voire suréchantillonné, à une fréquence pouvant atteindre le mégahertz voire beaucoup plus. En conséquence, une séquence de traitement par l'unité de corrélation est à la même fréquence que la fréquence de présentation des échantillons. Or, il est connu qu'un échauffement d'un circuit intégré augmente avec une fréquence de fonctionnement de celui-ci et ce notamment dans le cas où le circuit intégré utiliserait une technologie à base de transistor à effet de champ. Ainsi, un circuit fonctionnant à une première fréquence subira un échauffement plus faible qu'un deuxième circuit fonctionnant à une deuxième fréquence plus élevée que la deuxième fréquence. En outre, un vieillissement du deuxième circuit est plus rapide qu'un vieillissement du premier circuit et donc une dégradation des performances associées à ce circuit intégré est plus rapide.

La présente invention permet de remédier à ces problèmes en proposant un procédé de corrélation partielle fonctionnant à une fréquence réduite d'un facteur variable et dont une robustesse aux perturbations de courte durée est améliorée.

En outre, avec le procédé selon l'invention, on réalise une première série de corrélations partielles, donc avec une faible consommation, pour estimer si une séquence a de grandes chances ou non d'être la séquence qui a permis de produire le signal reçu.

L'invention a donc pour objet un procédé de corrélation, dans un récepteur d'un système CDMA, entre un signal reçu, préalablement modulé par une séquence d'étalement choisie parmi plusieurs, et cette séquence d'étalement dans lequel :
- on échantillonne le signal reçu et on obtient un signal échantillonné,
caractérisé en ce que :
- on produit une première suite d'échantillons à partir d'une première décimation régulière du signal échantillonné,
- on produit une deuxième suite d'échantillons à partir d'une deuxième décimation régulière d'une séquence d'étalement,
- on réalise des corrélations partielles entre des premières suites d'échantillons et la deuxième suite d'échantillons jusqu'à identifier une séquence désétalée et ou un signal de synchronisation.

Elle a également pour objet une utilisation du procédé de l'invention dans un téléphone mobile.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1: une réalisation, sous forme d'un schéma de principe simplifié, d'un téléphone mobile permettant de mettre en oeuvre le procédé de l'invention ;
- Figure 2 : une représentation, sous forme d'une succession d'étapes, d'un fonctionnement du procédé de l'invention.

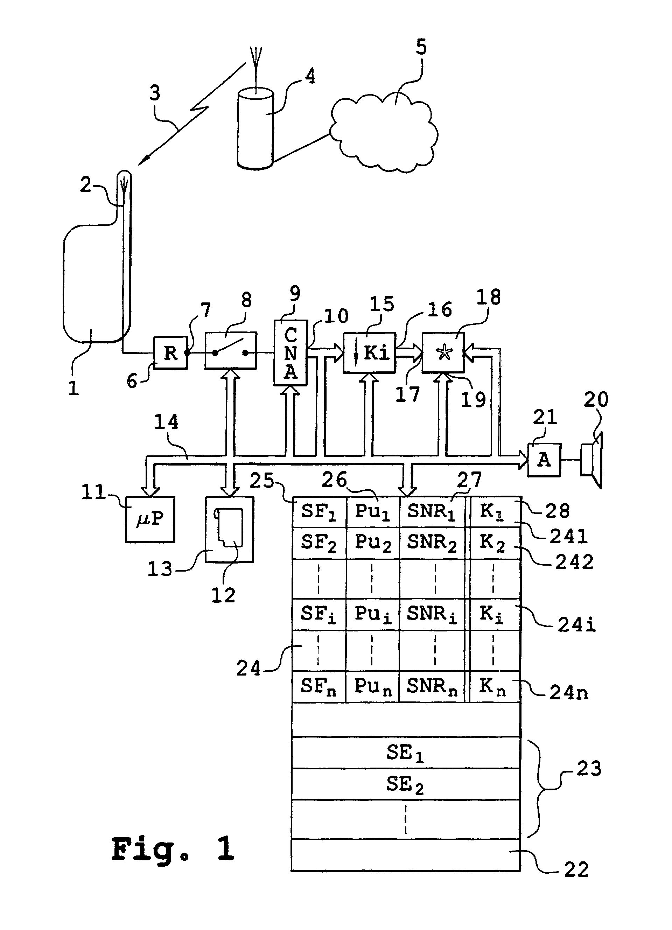

La figure 1 montre un exemple de mise en oeuvre du procédé de l'invention dans un téléphone 1 mobile. Cet exemple simplifié fait apparaître une architecture très élémentaire du téléphone 1 afin de mettre en évidence les différents moyens utilisés pour mettre en oeuvre le procédé de l'invention. Bien évidemment, ces différents moyens pourront être combinés ou regroupés dans un même dispositif. Cependant, dans un souci de simplicité de la description, on utilisera par la suite cette architecture simplifiée du téléphone 1 comme support.

Ainsi, le téléphone 1 comporte une antenne 2 pour capter un signal 3 radioélectrique émis par une station 4 de base d'un réseau 5 de téléphonie mobile. Dans l'invention, le signal 3 est émis en respectant un protocole d'accès de type CDMA. Avec ce type de protocole d'accès, un signal à émettre est modulé par une séquence dite d'étalement. Dans un exemple, on multiplie le signal à émettre par une séquence SEi d'étalement parmi plusieurs. Un rapport entre un rythme de la séquence SEi et un rythme du signal à émettre est nommé facteur SFi d'étalement, l'indice i désignant la séquence SEi. Ainsi, à l'émission, on multiplie un signal à émettre par une séquence d'étalement puis, à la réception, on réalise une série de corrélation entre le signal reçu et une série de séquences d'étalement jusqu'à obtenir un maximum de corrélations ou pic de corrélation. Un pic de corrélation indique que la séquence d'étalement utilisée en réception correspond à la séquence utilisée à l'émission. Il s'agit généralement du produit de corrélation dont un résultat donne la valeur la plus grande.

Ainsi, le signal 3 reçu par l'antenne 2 est transmis à un dispositif 6 de réception réalisant notamment des opérations de transposition de fréquence et de filtrage. Le dispositif 6 produit, à une sortie 7, un signal reçu. Ce signal reçu est transmis, par l'intermédiaire d'un moyen 8 d'échantillonnage, à un moyen 9 de conversion sous une forme numérique. Le moyen 8 ou encore échantillonneur 8 peut, par exemple, se présenter sous la forme d'un interrupteur. Le moyen 9 se présente généralement sous la forme d'un convertisseur 9 analogique numérique ou encore CAN. Le convertisseur 9 produit à une sortie 10 un signal échantillonné. Le téléphone 1 comporte en outre un microprocesseur 11 commandé par un programme 12 dans une mémoire de programme 13 par l'intermédiaire d'un bus 14 de données, d'adresses et de commandes. Selon une caractéristique essentielle de l'invention, le signal échantillonné est transmis à un moyen 15 de décimation afin de produire une première suite d'échantillons à partir d'une décimation régulière du signal échantillonné. Dans un exemple préféré, le moyen 15 est réglé par le microprocesseur 11 par l'intermédiaire du bus 14 à l'aide d'une valeur déterminée du facteur de décimation.

Dans un exemple préféré, la valeur du facteur de décimation du moyen 15 est réglée en fonction d'une valeur d'un rapport signal sur bruit associé au signal reçu. Ce rapport signal sur bruit peut être calculé, par exemple, à partir du signal échantillonné présent en sortie 10. Le facteur de décimation peut aussi être calculé en fonction d'une valeur de la puissance du signal reçu, cette valeur pouvant, elle aussi, être obtenue à partir de la suite d'échantillons en sortie 10. Le facteur de décimation peut encore être réglé à partir d'une valeur du facteur SFi associé au signal reçu. La valeur du facteur d'étalement utilisé est connue du téléphone 1 puisque, lors du protocole d'établissement d'une communication entre le téléphone 1 et le réseau 5, une valeur du facteur d'étalement à utiliser pour cette communication a été déterminée pendant le protocole. Enfin, cette valeur du facteur de décimation du moyen 15 peut être déterminée à partir d'une combinaison des trois critères précédents.

La première suite d'échantillons est ainsi obtenue à une sortie 16 du moyen 15. Cette première suite d'échantillons est transmise à une entrée 17 d'un moyen 18 de corrélation ou encore corrélateur 18. Le corrélateur 18 a pour fonction de réaliser un produit de corrélation entre la première suite d'échantillons à l'entrée 17 et une deuxième suite d'échantillons, présente à une entrée 19, jusqu'à identifier une séquence désétalée et/ou un signal de synchronisation. Une séquence désétalée est, dans cette description, un terme générique employé pour parler du signal objet de la modulation par une séquence d'étalement tel qu'un signal de parole par exemple ou encore d'un signal de données. Dans un exemple avec un signal de parole, celui-ci est ensuite envoyé à un haut-parleur 20 par l'intermédiaire d'un dispositif 21 de mise en forme et d'amplification. Identifier un signal de synchronisation signifie que l'on vient d'identifier, dans le signal reçu, un instant de synchronisation. Cet instant de synchronisation permet de décoder un signal reçu et ainsi de pouvoir lire et interpréter les messages reçus. A chaque nouveau produit de corrélation, on présente à l'entrée 19 une nouvelle deuxième suite d'échantillons correspondant à une nouvelle séquence d'étalement. Il est connu, dans le cas du CDMA notamment, qu'une intercorrélation entre un signal modulé par une séquence d'étalement et une autre séquence d'étalement donne un résultat nul ou plutôt faible alors qu'une intercorrélation entre un signal modulé par une première séquence d'étalement et cette même séquence d'étalement donne une valeur beaucoup plus élevée que dans les autres cas. Ainsi, on recommence le produit de corrélation jusqu'à obtenir une telle valeur.

Les séquences d'étalement utilisées par le téléphone 1 et présentées à l'entrée 19 sont mémorisées dans le téléphone 1 dans une mémoire 22 de sauvegarde par exemple. Ainsi, la mémoire 22 comporte, à un emplacement mémoire 23, un ensemble de séquence d'étalement.

Dans une variante préférée, et pour simplifier un réglage du facteur de décimation du moyen 15, on mémorise dans une mémoire de sauvegarde, par exemple la mémoire 22, une table 24 de facteurs de décimations. Une valeur d'un facteur Kᵢ est associée, dans la table 24, à une valeur du facteur d'étalement utilisé avec le signal reçu et/ou à une valeur de la puissance du signal reçu et/ou à une valeur d'un rapport signal sur bruit. La table 24 peut être vue symboliquement comme un ensemble de lignes 24 1, 24 2 à 24 n, chaque ligne correspondant à un emplacement mémoire comportant, dans un exemple préféré, quatre champs. Ainsi, dans cet exemple préféré, la ligne 24 1 comporte un premier champ 25 dans lequel est mémorisée une valeur d'un facteur d'étalement, un champ 26 dans lequel est mémorisée une valeur de puissance, un champ 27 dans lequel est mémorisée une valeur d'un rapport signal sur bruit et un champ 28 dans lequel est mémorisée une valeur du facteur de décimation associé aux trois paramètres précédents. En conséquence, le programme 12, par l'intermédiaire du microprocesseur 11, recherche dans la table 24 la ligne, parmi les lignes 24 1 à 24 n, correspondant à la valeur de facteur d'étalement et/ou à la valeur de puissance et/ou à la valeur du rapport signal sur bruit déterminée lors de la phase de mise en communication pour le premier et mesurée, à la réception, pour les deux derniers. Une fois la ligne trouvée le microprocesseur 11 règle le moyen 15 à l'aide du facteur de décimation associée à cette ligne. Afin d'éviter d'avoir une table 24 trop encombrante qui comporterait toutes les valeurs possibles, on mémorise dans cette table 24 un nombre limité de paramètres jugés comme étant les plus fréquents. Dans le cas où une valeur déterminée et/ou mesurée ne serait pas présente dans la table 24, on aura alors recours à une méthode d'interpolation à partir notamment des deux valeurs les plus proches dans la table. Toutefois, on pourrait, afin d'éliminer ces calculs d'interpolation, sélectionner le facteur de décimation dont une valeur d'un paramètre associé est la plus proche d'une valeur déterminée et/ou mesurée dans le téléphone 1.

Dans une autre variante, ou dans cette variante préférée, on utilise le procédé de l'invention comme moyen d'estimation grossier de la séquence d'étalement utilisée. Ainsi, on identifie une séquence d'étalement comme dans l'invention puis on passe à une phase de précision de l'identification de la séquence désétalée et/ou du signal de synchronisation. Pour cela, le programme 12 compare un résultat du produit de corrélation avec un seuil, de préférence prédéterminé. Lorsque le résultat du produit de corrélation est supérieur à ce seuil alors on réalise à nouveau un produit de corrélation entre le signal échantillonné et la séquence d'étalement à l'origine de la deuxième suite d'échantillons utilisée dans ce produit de corrélation. Cette variante sera tout particulièrement utilisée lors d'une recherche de synchronisation afin d'accélérer une convergence de cette recherche.

Dans l'invention, le corrélateur 18, recevant aux entrées 17 et 19 des signaux ayant subi une décimation, fonctionne à un rythme limitant ainsi un échauffement de celui-ci.

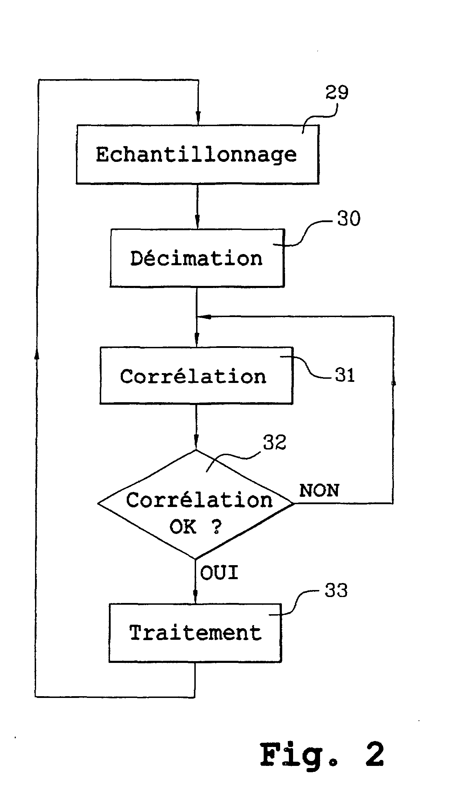

La figure 2 montre, sous forme d'un algorithme, un exemple de fonctionnement du procédé de l'invention. Ainsi, dans une étape 29, le signal 3 reçu par le téléphone 1 est échantillonné par le moyen 8 d'échantillonnage. Ces échantillons sont convertis par le convertisseur 9 afin de produire la première suite d'échantillons. Cette première suite d'échantillons est décimée de manière régulière, dans une étape 30, par le moyen 15 dont un facteur de décimation est réglé par le microprocesseur 11. Une décimation symétrique est effectuée sur la séquence d'étalement afin de conserver une corrélation cohérente. En effet un pic de corrélation est détecté lors qu'il y a concordance entre des échantillons et les coefficients de la séquence d'étalement. Si on supprime certains échantillons, il faut donc supprimer certains coefficients afin de maintenir la cohérence du calcul. Sinon la concordance entre les échantillons et les coefficients ne peut plus se produire car il y a un décalage entre les échantillons et les coefficients. La corrélation ainsi effectuée est une corrélation partielle.

Dans une étape 31, cette première suite d'échantillons est corrélée avec une deuxième suite d'échantillons présente dans le téléphone 1, dans la mémoire 22 par exemple. Dans une étape 32 de test, on contrôle, à partir d'un résultat du produit de corrélation, la présence ou non d'un pic de corrélation. Dans le cas où un pic de corrélation est détecté, lors d'une corrélation partielle, on procède à une corrélation totale. C'est à dire une corrélation mettant en oeuvre l'ensemble de échantillons et des coefficients afin de pouvoir extraire l'information contenue dans les échantillons. Il s'agit alors d'une corrélation totale.

Dans le cas contraire, si on ne détecte pas de pic de corrélation, on sélectionne une nouvelle séquence d'étalement, que l'on décime, et on recommence l'étape 31 de corrélation.

On procède alors, dans une étape 33, à une phase de traitement de l'information ainsi extraite. Cette phase de traitement est, par exemple, une phase de mise en forme et d'amplification d'un signal pour le transmettre à un haut-parleur 20.

Le procédé de l'invention est utilisé de manière préférée dans un téléphone mobile réalisé en respectant la norme UMTS ou IMT 2000 (International Mobile Telephone pour téléphone mobile international) cependant l'invention peut être appliquée à tout mécanisme de réception, réalisant des opérations de synchronisation et/ou de démodulation, pour des systèmes à étalement de spectre utilisant des produits de corrélations pour retrouver une information utile.

## Revendications

1. Procédé de corrélation, dans un récepteur d'un système CDMA, entre un signal reçu, préalablement modulé par une séquence d'étalement choisie parmi plusieurs, et cette séquence d'étalement dans lequel :
- on échantillonne (29) le signal reçu et on obtient un signal échantillonné,
- on produit (30) une première suite d'échantillons à partir d'une première décimation régulière du signal échantillonné,
**caractérisé en ce que** :
- on produit (30) une deuxième suite d'échantillons à partir d'une deuxième décimation régulière d'une séquence d'étalement,
- on réalise (31,32) des corrélations partielles entre des premières suite d'échantillons et la deuxième suite d'échantillons jusqu'à identifier une séquence désétalée et ou un signal de synchronisation.

2. Procédé selon la revendication 1, **caractérisé en ce que** le nombre d'échantillons résultant de la décimation du signal échantillonné est inférieur au nombre d'échantillons nécessaires pour effectuer une corrélation totale.

3. Procédé selon l'une des revendications 1 ou 2, **caractérisé en ce que** des facteurs de décimation utilisés pour la première et la deuxième décimation sont identiques.

4. Procédé selon l'une des revendications 1 à 3 **caractérisé en ce que**:
- on règle le facteur de décimation en fonction (24) d'une valeur du facteur d'étalement utilisé avec le signal reçu et ou d'une valeur mesurée de la puissance du signal reçu et ou d'une valeur mesurée d'un rapport signal sur bruit.

5. Procédé selon l'une des revendications 1 à 4 **caractérisé en ce que**:
- on mémorise dans une mémoire (22) de sauvegarde une table (24) de facteurs de décimation, une valeur d'un facteur de décimation étant associée dans la table à une valeur du facteur d'étalement utilisé avec le signal reçu et ou à une valeur de la puissance du signal reçu et ou à une valeur d'un rapport signal sur bruit.

6. Procédé selon l'une des revendications 1 à 5 **caractérisé en ce que** pour préciser une identification de la séquence désétalée et ou du signal de synchronisation :
- on compare un résultat du produit de corrélation avec un seuil ;
et **en ce que** lorsque le résultat est supérieur au seuil :
- on réalise un nouveau produit de corrélation entre le signal échantillonné et la séquence d'étalement à l'origine de la deuxième suite d'échantillons.

7. Utilisation du procédé selon l'une des revendications 1 à 6 dans un téléphone (1) mobile.

8. Utilisation du procédé selon l'une des revendications 1 à 6 dans un téléphone mobile réalisé en respectant la norme UMTS ou IMT2000.

## Claims

1. Process for correlation, in a receiver of a CDMA system, between a received signal, previously modulated by a spreading sequence selected from a plurality, and this spreading sequence in which:
- the signal received is sampled (29) and a sampled signal is obtained,
- a first series of samples is produced (30) from a first regular decimation of the sampled signal,
***characterised by** the fact that:*
- a second series of samples is produced from a second regular decimation (30) of a spreading sequence,
- partial correlations are made (31, 32) between first series of samples and the second series of samples until an unspread sequence and or a synchronisation signal is identified.

2. Process as described in claim 1, ***characterised by** the fact that* the number of samples resulting from the decimation of the sampled signal is lower than the number of samples required to effect total correlation.

3. Process as described in one of claims 1 or 2,
***characterised by** the fact that* decimation factors used for the first and the second decimation are identical.

4. Process as described in one of claims 1 to 3,
***characterised by** the fact that:*
- the decimation factor is adjusted as a function (24) of a value of the spreading factor used with the signal received or of a measured value of the strength of the signal received and or of a measured value of a signal over noise ratio.

5. Process as described in one of claims 1 to 4,
***characterised by** the fact that:*
- a table (24) of decimation factors is stored in a back-up memory (22), a value of a decimation factor being associated in the table with a value of the spreading factor used with the signal received and or with a value of. the strength of the signal received and or with a value of a signal over noise ratio.

6. Process as described in one of claims 1 to 5,
***characterised by** the fact that* to specify an identification of the unspread sequence or of the synchronisation signal:
- a result of the product of correlation is compared with a threshold; and *by the fact that* when the result is greater than the threshold:
- a new correlation product is produced between the sampled signal and the spreading sequence at the origin of the second series of samples.

7. Use of the process as described in one of claims 1 to 6 in a mobile telephone (1).

8. Use of the process as described in one of claims 1 to 6 in a mobile telephone made in accordance with the UMTS or IMT2000 standard.

## Patentansprüche

1. Korrelationsverfahren in einem Empfänger eines CDMA-Systems zwischen einem Empfangssignal, das vorher von einer Spreizabfolge, die unter vielen ausgewählt wurde, moduliert wurde, und dieser Spreizabfolge, mit den folgenden Schritten:
- Abtasten (29) des Empfangssignals und Erhalten eines Abtastsignals,
- Erzeugen (30) einer ersten Abtastfolge ausgehend von einer normalen ersten Dezimation des abgetasteten Signals,
**gekennzeichnet durch** die folgenden Schritte:
- Erzeugen einer zweiten Abtastfolge ausgehend von einer zweiten normalen Dezimation einer Spreizabfolge,
- Erstellen (31,32) von Teilkorrelationen zwischen der ersten Abtastfolgen und der zweiten Abtastfolge, bis eine nicht gespreizte Abfolge und/oder ein Synchronisationssignal identifiziert wird.

2. Verfahren nach Anspruch 1, **dadurch gekennzeichnet, daß** die Anzahl der Abtastungen, die sich aus der Dezimation des abgetasteten Signals ergibt, geringer ist als die Anzahl der Abtastungen, die für die Erstellung einer Gesamtkorrelation notwendig ist.

3. Verfahren nach einem der Ansprüche 1 oder 2, **dadurch gekennzeichnet, daß** die für die erste und zweite Dezimation verwendeten Faktoren identisch sind.

4. Verfahren nach einem der Ansprüche 1 bis 3, **dadurch gekennzeichnet, daß** der Dezimationsfaktor in Funktion (24) eines Wertes des Spreizfaktors gewählt wird, der mit dem Empfangssignal verwendet wird und/oder in Funktion eines gemessenen Wertes der Leistung des Empfangssignals und/oder eines gemessenen Wertes eines Signal-/Rauschverhältnisses.

5. Verfahren nach einem der Ansprüche 1 bis 4, **dadurch gekennzeichnet, daß** in einem Sicherungsspeicher (22) eine Tabelle (24) der Dezimationsfaktoren gespeichert wird, wobei ein Wert eines Dezimationsfaktors in der Tabelle mit einem Wert des Spreizfaktors verbunden ist, der mit dem Empfangssignal und/oder einem Wert der Leistung des Empfangssignals und/oder einem Signal-/ Rauschverhältnis verwendet wird.

6. Verfahren nach einem der Ansprüche 1 bis 5, **dadurch gekennzeichnet, daß** zur Präzisierung einer Identifikation der nicht gespreizten Abfolge und/oder des Synchronisationssignals folgende Schritte ablaufen:
- Vergleichen eines Ergebnisses des Korrelationsproduktes mit einem Grenzwert, und wenn das Ergebnis größer als der Grenzwert ist:
- Erzeugen eines neuen Korrelationsproduktes zwischen dem Abtastsignal und der Spreizabfolge ausgehend von der zweiten Abtastfolge.

7. Verwendung des Verfahren nach einem der Ansprüche 1 bis 6 in einem Mobiltelefon (1).

8. Verwendung des Verfahrens nach einem der Ansprüche 1 bis 6 in einem Mobiltelefon, das unter der Norm UMTS oder IMT2000 hergestellt wird.
